**Europäisches Patentamt**

**European Patent Office**

**Office européen des brevets**

(11) Publication number:

# 0 074 991
## B1

⑫ # EUROPEAN PATENT SPECIFICATION

㊺ Date of publication of patent specification: **02.10.85**

㉑ Application number: **82901038.8**

㉒ Date of filing: **24.03.82**

㊊ International application number:
**PCT/SE82/00087**

㊇ International publication number:
**WO 82/03439 14.10.82 Gazette 82/25**

㊿ Int. Cl.⁴: **F 16 L 29/00, F 16 L 37/28**

(54) **HOSE COUPLING.**

㉚ Priority: **03.04.81 SE 8102153**

㊸ Date of publication of application:
**30.03.83 Bulletin 83/13**

㊺ Publication of the grant of the patent:
**02.10.85 Bulletin 85/40**

(84) Designated Contracting States:
**AT BE CH DE FR GB LI LU NL SE**

㊿ References cited:
**SE-B- 399 315
SE-B- 403 445
US-A-3 729 023**

(73) Proprietor: **STRÖMDAHL, Leif
Klackjärnsliden 3
S-654 81 Karlstad (SE)**

(72) Inventor: **STRÖMDAHL, Leif
Klackjärnsliden 3
S-654 81 Karlstad (SE)**

(74) Representative: **Hynell, Magnus
Hynell Patenttjänst AB Box 236
S-683 02 Hagfors (SE)**

Courier Press, Leamington Spa, England.

## Description

The invention relates to a coupling which permits the coupling together of a male portion which, during coupling is connected to a pressure-producing pump or compressor, and a female portion which is connected to a fluid machine provided with suitable control valve arrangement which in the rest position does not block the connection between the incoming pressure pipeline and return pipeline. Both the male portion and the female portion consist essentially of two concentric tube sleeves. During connection the male sleeves are introduced into the female sleeves. During this process initially a connection is opened between the return pipelines and subsequently the connection is opened on the high pressure side. The mechanical interconnection can be effected by means of a bayonet lock which can be designed in such a way that the male and female portions can be allowed to rotate freely with respect to each other.

State of the art

A description is given in U.S. patent 3 211 178 of a coupling arrangement which is designed for the rapid disconnection of a coupling arrangement which comprises two flow paths. In this case each of the coupling halves is connected to two hoses and the hoses can be designed for one and the same or different fluids. The coupling halves are provided with valve arrangements which close the flow paths of each of the coupling halves when these are disconnected. The arrangement concerned thus permits disconnection on those occasions when any of the fluid paths or both flow paths are connected with a pressure-producing pressure source.

The design concerned, with minor modifications, is stated also to be of application for a coaxial hose for driving fluid apparatus or fluid machines. When employing a coaxial hose in such a context it is advisable to allow the inner hose to function as high pressure hose. Thus when the coupling arrangement in accordance with the said U.S. patent specification is adapted to coaxial hoses, the central flow paths should be employed as the high pressure portion. The coupling can then be employed as a rapid disconnection arrangement between for example an hydraulic pump and a fluid machine. However the coupling is not so designed that the peripheral return flow in conjunction with interconnection is opened prior to the central high pressure flow. Hence the coupling cannot be employed for interconnection when one of the coupling halves is connected with for example a pressure-producing pump or compressor.

U.S.—A—2 471 798 too describes a coupling arrangement which is so designed that the flow paths are automatically closed when the connection is broken. The coupling is designed for coaxial hoses and can be used for a plurality of concentric flow paths. The coupling in accordance with the U.S.—A—2 471 798 is screwed together during interconnection. As a result interconnection becomes time-consuming and awkward. It is possible for the coupling halves to be screwed together when any of the flow paths has a moderate pressure, but then there is a risk of leakage because the design is not suitable for the purpose. U.S.—A—4 102 082 describes a quick coupling designed for pneumatic removal of dust and the like. The coupling is not useful for interconnecting coaxial hoses which may be rotated relative to one another.

Generally it can be stated that fluid machines of the type comprising hydraulic machines or hydraulic cylinders are as a rule connected to a pressure-producing pump and to a return tank by means of two separate hoses. The hose couplings employed are as a rule of the single-flow rapid coupling type or screw couplings. However these couplings permit only coupling up when the pressure pipeline has been disconnected. The hoses restrict the possible application of fluid machines of the hand machine type. The corresponding electrical machines can be connected to an energy source merely by means of a flex which signifies an advantage for the electrical machines as compared with fluid machines. As regards hand machines and other machines which in connection with their use have to be rotated a number of revolutions in the same direction it becomes particularly difficult to have to connect up the machine by means of two hoses. Summarising, the requirement for a high pressure hose and a return hose for driving fluid machines considerably restricts the possible applications of these machines. The coaxial hose is known but since the present state of the art does not offer an easily-handled coupling which permits interconnection of fluid machines by means of a coaxial hose with a pressure producing pressure source, the conditions do not appear to exist for a wider application of coaxial hoses for driving fluid machines.

Review of the invention

One aim of the present invention is to provide a coaxial hose coupling for coaxial hoses which permits rapid manual coupling of one coupling half, which during the coupling operation is connected to a pressure producing pump or compressor, to the second coupling half.

Preferably the invention also provides a coaxial coupling which in the coupled state permits free rotation of one coupling half with respect to the other.

Preferably the invention also provides a coaxial coupling, the component parts of which are of simple design as regards production technology, comprising simple compression springs together with essentially rotational symmetrical components with cylindrical and conical surfaces having a common main axis and plane surfaces.

An embodiment includes the features that both the male portion of the coaxial coupling and its female portion consist of coaxial tube sleeves in which the internal tube comprises the high pressure portion, and the sleeves are so designed that both the inner tube and the outer tube of the male portion can be introduced into respectively the inner tube and the outer tube of the female portion during interconnection, whereby the outer edge of the outer tube of the male portion, when this has merely been introduced to a few tenths of a millimetre into the female portion, has pushed a spring-loaded valve ring in the outer tube of the female portion, with the result that on interconnection a connection is provided practically immediately between the flow paths of the male portion and female portion on the low pressure side. The design is such that the connection between the central tubes of the coupling halves which is designed for high pressure is not opened before the male portion has penetrated to a relatively large extent into the female portion of the coaxial coupling. Since the central pipeline for high pressure does not start to open before the return pipeline has opened, the coupling halves can be introduced further by manual force in spite of the fact that the male portion is directly connected to the pressure source until the central flow path is fully opened and until the coupling halves have been coupled together mechanically, e.g. by means of a bayonet lock.

Further features and advantages of the invention will be outlined in the following description together with the following patent claims.

Brief description of diagrams

In the following description reference will be made to the appended diagrams in which:

Fig. 1 illustrates a longitudinal section through the male portion of the coaxial coupling.

Fig. 2 provides a longitudinal section through the female portion of the coaxial coupling.

Fig. 3 provides a longitudinal section through the male and female portions of the coaxial coupling, the female portion being directly connected to a fluid machine which is provided with a control valve which connects the pressure pipeline with the return pipeline when the machine is not in operation.

Fig. 4 illustrates the end of the coaxial coupling which during interconnection is brought to the male portion of the coupling.

Fig. 5 shows the male portion of the coaxial coupling viewed from the side and at right angles to the main axis of symmetry of the coupling, whereby a portion of the locking sleeve has been eliminated so as to illustrate details of the interconnection sleeve and the locking segment.

Fig. 6 illustrates the male portion of the coaxial coupling viewed from the side and at right angles to the main axis of symmetry of the coupling.

Fig. 7 shows the female portion of the axial coupling viewed from the direction in which the component concerned is introduced when the male portion is interconnected with the female portion.

Fig. 8 illustrates portions of the mechanical connecting arrangement.

Fig. 9 illustrates the front portions of the outer tube sleeve of the female portion.

Fig. 10 shows an example of the design principle for high pressure seals.

Description of preferred embodiments

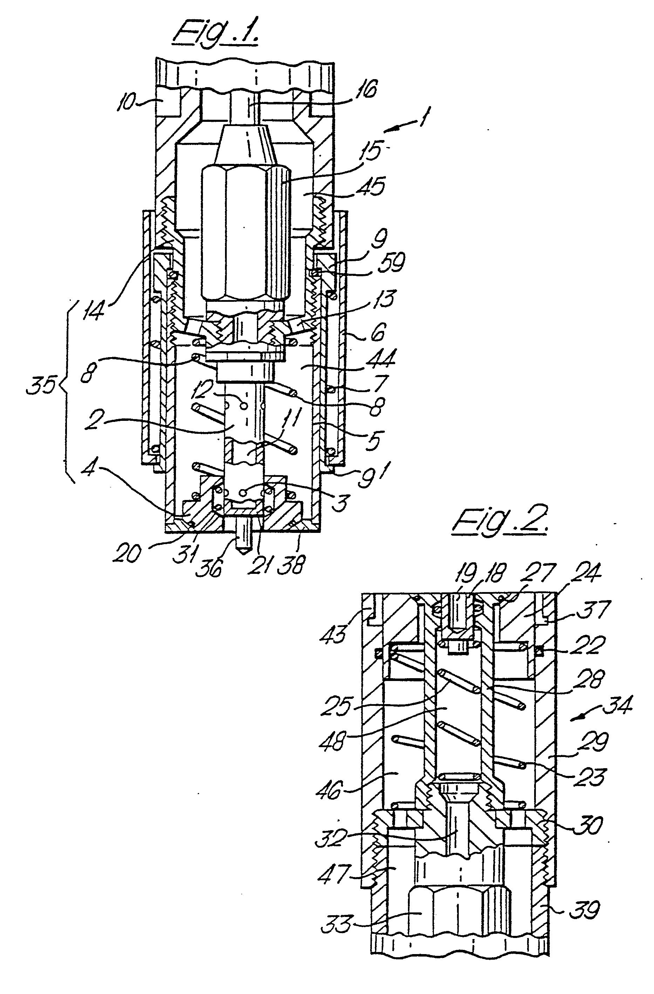

Fig. 1 shows a longitudinal section through the male portion of the coaxial coupling. The coaxial coupling consists of a male portion 1 and a female portion 34 as shown in Fig. 2. The male portion comprises an outer tube sleeve 5 and an inner tube sleeve 2 which at its forward end is provided with a gable 21 and a centring pin 36.

The outer tube sleeve 5 of the male portion is provided at its forward end with a sealing ring 38 which seals against an outer seal 20 on a slide ring 4 when the said slide ring 4 is located in its most forward position or in the position shown in Fig. 1. The seal 20 ensures that no fluid leaks out between the sealing ring 38 and the slide ring 4 when the coupling halves are not interconnected. A seal 31 at the same time ensures that no leakage of fluid occurs between the cylindrical casing of the inner tube sleeve and the central hole through the slide ring 4. When the coupling halves have been disengaged the slide ring 4 is maintained in its forward position by means of a slide valve spring 8.

Together with a fastening sleeve 14 the inner tube sleeve 2 together with the slide valve spring 8 and the slide ring 4 form a slide valve 35. The inner tube sleeve 2 has a number of apertures 3 in the forward portion of the inner tube sleeve 2 which are open and thus not covered by the slide ring 4 when the coupling halves are interconnected. In its rear portion the inner tube sleeve 2 is provided furthermore with a number of apertures 12 which are covered by the slide ring 4 when the coupling halves are interconnected.

A number of apertures 13 arranged in a ring ensure the connection between a forward chamber 44 and a rear chamber 45 for the return flow in the male portion.

Fig. 1 also illustrates a high pressure hose 16 which comprises the internal hose in a coaxial hose with an outer hose 10. The space between the outer hose 10 and the high pressure hose 16 is employed as the return pipeline. By means of a connection portion 15 the high pressure hose 16 is connected with a high pressure channel 11 in the slide valve 35.

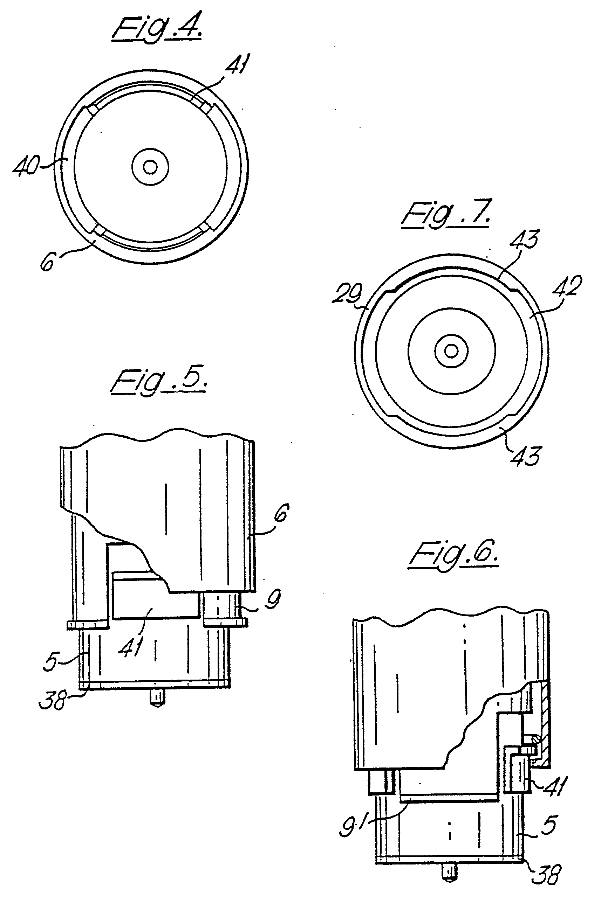

The locking arrangement for holding the coupling halves mechanically together comprises a connecting sleeve 9 with a locking collar 9', a locking sleeve spring 7 and a locking sleeve 6 together with two locking segments 41 as shown in Fig. 4.

The female portion 34 of the coupling which is illustrated in Fig. 2 comprises an outer tube sleeve 29 with a locking groove 37 and two locking flanges 43. An inner tube sleeve in the female portion is designated as 28. A sealing ring 24 is kept in the forward position as shown in Fig. 2 by means of a compression spring 23. A seal 27 ensures that no leakage takes place between the sealing ring 24 and the inner tube sleeve 28. The seal 22 ensures that no leakage occurs between the sealing ring 24 and the outer tube sleeve 29.

A sealing piston 18 is maintained in the forward position as shown in Fig. 2 by a pressure spring 25. A seal 26 ensures that no leakage occurs between the inner tube sleeve 28 and the sealing piston 18. The seals 26 and 31 which are subjected to high pressure can in principle be designed as shown in Fig. 10. If the O-ring 62 is subjected to high pressure from a gap 65 it is prevented from becoming jammed in a gap 66 by means of a supporting ring 61 which can preferentially be made from harder material and which can be moderately elastic, e.g. Teflon (trade mark). The O-ring 62 can be made for example from fluorinated rubber which at the same time provides good temperature stability. A centering hole 19 on the sealing piston 18 is employed for centering the coupling halves 34, 1 in relation to each other during inter-connection. The centering pin 36 is introduced into the centering hole 19. The threaded hollow washer 30 maintains the inner sleeve 28 centered with respect to the outer sleeve 29. The connecting portion 33 connects an inner chamber 48 in the female portion with a high pressure pipeline.

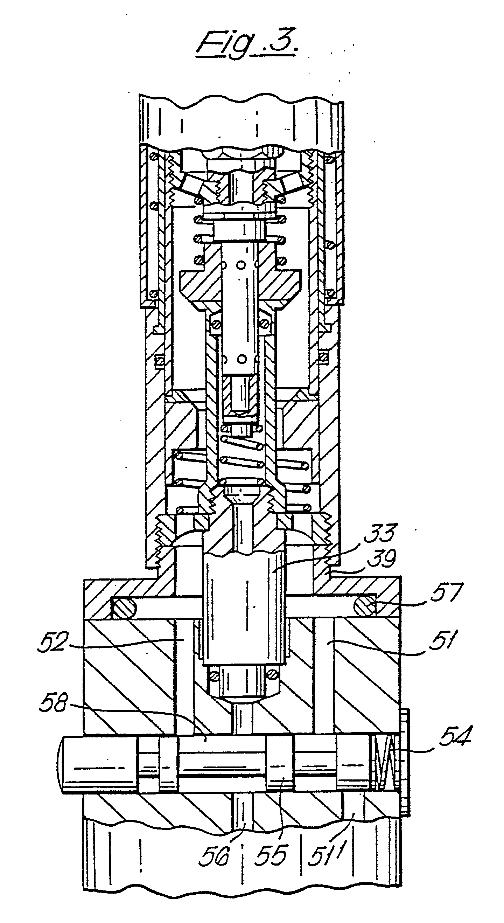

Fig. 3 shows a longitudinal section through the coaxial coupling when the coupling halves have been interconnected. In addition a section is shown through a portion of a fluid machine. The machine is provided with a valve consisting essentially of a slide 55 and a spring 54 which in the position of the slide 55 illustrated in Fig. 3 connects the pressure flow and the return flow via a chamber 58. The position of slide 55 illustrated in Fig. 3 is the normal position when the machine is not in operation.

When the fluid machine is in operation the slide 55 is moved to the right whereby a channel for the return flow which is employed when the machine is not in operation is closed off and simultaneously a channel 51 for the return flow is connected with a return channel 51'. Thus the flow can pass through the machine when the slide 55 is moved to the right. The machine starts when the slide 55 is moved over to the right.

When the coupling halves 1, 34 are connected together the inner and outer tube sleeve 2, 5 of the male portion are introduced into the respective inner and outer sleeves 28, 29 of the female portion and thereby act on the sealing ring 38 of sealing ring 24 of the outer tube sleeve 5 of the male portion which is pushed into the female portion 34. Even after few tenths of a millimetre displacement of sealing ring 24 a gap is opened between sealing ring 24 and the inner tube sleeve 28, and a connection is formed between the forward chamber of the male portion for the return flow 44 and the forward chamber of the female portion for the return flow 46. The inner chamber 48 of the female portion is thus, via chamber 58, connected with an open return channel provided that the slide 55 adopts the position illustrated in Fig. 3. The return channel can for example lead to an hydraulic tank.

During continued introduction of the male portion of the coupling into its female portion the valve piston 18 is pushed backwards into the inner tube sleeve 28 of the female portion where it is maintained in a central position by the centering pin 26. During this also the inner tube sleeve 2 of the male portion is introduced into the inner chamber 48 of the female portion. The connection between the inner chamber 48 of the female portion and the high pressure channel 11 in the inner tube sleeve 2 of the male portion is however not brought about until the apertures 3 in the casing of the inner tube sleeve 2 of the male portion have been introduced to such an extent into the inner tube sleeve of the female portion that the said apertures 3 have passed a seal 26. When the apertures 3 have traversed the seal 26 the chamber 48 is connected with the high pressure channel 11. However in the male portion of the coupling the high pressure channel 11 is still connected with the chamber 44 for the return flow until a number of apertures 12 in the casing surface of the inner tube sleeve 2 have been covered by the slide ring 4.

At the same time as the inner tube sleeve 2 of the male portion penetrates the inner tube 28 of the female portion, the slide ring 4 is pushed rearwards along the inner tube sleeve 2 of the male portion so that it covers the apertures 12 in the said casing of the inner tube sleeve 2. The flow channels for high pressure in the coaxial coupling are thus solely connected with each other and only the mechanical interconnection remains to be provided.

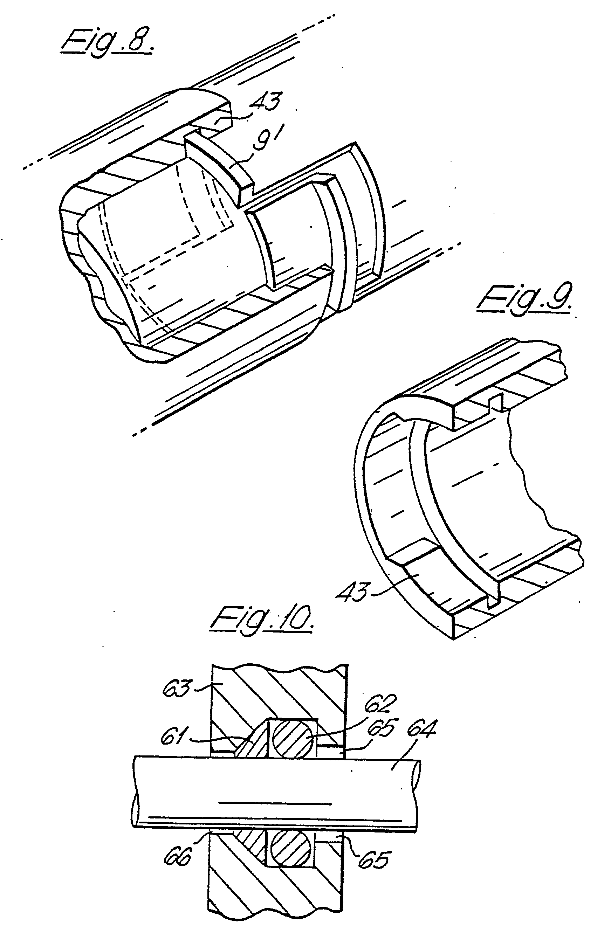

Mechanical interconnection takes place by means of a bayonet lock. The bayonet lock comprises a locking sleeve 6, a connecting sleeve 9, two locking segments 41 and a locking sleeve spring 7. The locking segments 41 are located in recesses 49 in the connecting sleeve 9 as shown in Fig. 5. The forward end of the connecting sleeve 9 is designed as a locking collar 9'. When the coupling halves are brought together the locking collar 9' is introduced into recesses 42 in the outer sleeve 29 of the female portion as shown in Fig. 7. The coupling halves are then connected mechanically in that the locking sleeve 9 is rotated a quarter of a turn so that the locking collar 9' engages with the locking flange 43. As a result the locking segments 41 are pushed into the recesses 42 and thus the bayonet lock is locked.

The segments 41 are pushed into the recesses 42 by means of the compression force provided by compression spring 7. When the coupling is to be broken the segments are removed from the recesses 42 by moving the locking sleeve 6 on the male portion of the coupling towards the rear, so that the locking segments 41 are withdrawn from the recesses 42.

The male portion of the coupling and hence the coaxial hose 10, 16 can be twisted without restriction in relation to the female portion even when the coupling is mechanically engaged and the bayonet lock is in the locked position. The connecting sleeve 9 is namely built together with other components of the male portion of the coupling in such a way that this can rotate freely with respect to the said other components of the male portion of the coupling. Thus during assembly of the male portion care must be taken that there is some play between the connecting sleeve 9 and the connecting portion 17 for the return hose, the outer tube sleeve 5 of the male portion, the fastening sleeve 14 of the throttling valve and a locking spring ring 59.

When the coupling halves are broken the flow channels are automatically blocked by the valve arrangements. The forward chamber 46 of the female portion is closed off by the sealing ring 24 and the inner tube sleeve of the female portion is closed off by the sealing piston 18.

The slide ring 4 closes off both channel 11 and chamber 44.

The mechanical connection of the coupling halves can become superfluous if the coupling is mounted vertically and if the female portion is placed above the male portion. Here the coupling halves can be held together if for example the female portion is coupled directly to a machine which is heavy enough to hold the coupling halves together. This furthermore pre-supposes that the male portion is gripped in a suitable manner, e.g. in a pedestal. Even with such "gravity interconnection" the female portion can rotate freely with respect to the male portion. Hence in this case too the coupling can be regarded as also having a "swivel function".

**Claims**

1. Coupling (1, 34) for a conduit (16) and a return conduit (10), which permits connection of a first portion (1), which at the time of coupling is connected to a pressure producing pump or compressor, to a second portion (34) which is connected to a fluid machine provided with an actuating valve arrangement (54, 55), which in the rest position does not block the connection between the incoming pressure conduit and return conduit (52), characterised in that both the said first portion (1) and the said second portion (34) consist of coaxial tubular parts placed one into the other, of which the internal tube (2, 28) forms the high pressure part, in that said tube parts are so designed that both the inner tube (2) of the first portion (1) and its outer tube (5) can be introduced into the respective inner tube (28) and outer tube (29) of the second portion (34) during interconnection, whereby the edge of the outer tube (38, 5) of the first portion (1) after being introduced into the second portion (34) has pushed in a spring-loaded valve ring (24) in the outer tube (29) of the second portion (34) with the result that practically immediately on initiating interconnection a connection is established between the spaces between the inner and outer tubes of the first and second portions and that during continued introduction of the first portion (1) into the second portion (34) the inner tube (2) of the first portion, which is closed at its extreme end pushes a spring loaded valve body (18) into the inner tube (28) of the second portion (34) so that fluid under moderate pressure is introduced into the inner tube (28) of the second portion (34) through forwards holes (3) in the casing surface of the inner tube (2) of the first portion (1), whilst there are also rearward holes (12) in said casing surface which establish a connection between the inner tube (2) and the space between the inner tube (2) and the outer tube (5) of first portion (1) and in that a ring-shaped slide (4) is pushed by the inner tube (28) of the second portion (34) over the said rear holes (12) in the casing surface of the inner tube (2) of the first portion (1) during continued introduction of the first portion (1) into the second portion (34) whereby a fluid under pressure is introduced into the inner tube (28) of the second portion (34) and in that the coupling is equipped with a connecting device to maintain, at least in the length direction of the coupling, a connection, holding together the first and the second portions (1, 34) when these portions have been introduced far enough, the one into the other, to permit fluid to pass to the second portion (34) under full pressure.

2. Coupling as in claim 1, characterised in that the said connection device for maintaining a holding connection permits free rotation of the first portion (1) in relation to the second portion (34) when these components are connected together.

3. Coupling as in claim 1—2, characterised in that the said second portion (34) is connected with a fluid machine by means of a coaxial hose.

4. Coupling in accordance with any of the preceding claims characterised in that the inner tube (2) of first portion (1) is provided with a centering pin (36) which fits into a centering hole (19) in the said spring-loaded valve body (18) in the inner tube (28) of the second portion (34).

5. Coupling in accordance with any of the preceding claims characterised in that said connecting device is designed as a bayonet holder.

**Patentansprüche**

1. Verbinder (1, 34) für eine Rohrleitung (16) und eine Rücklaufleitung (10), welcher es ermöglicht, einen ersten Teil (1), der zur Zeit des Verbindens an eine druckerzeugende Pumpe bzw. einen Kompressor angeschlossen ist, mit einem zweiten, an eine mit einer Ventilbetätigungsvorrichtung (54. 55), die in der Ruhestellung die Verbindung zwischen der Druckzulaufleitung und der Rücklaufleitung (52) nicht blockiert, versehene Fluidmaschine angeschlossenen Teil (34) zu verbinden, dadurch gekennzeichnet, dass sowohl der erste besagte Teil (1) als auch der zweite besagte Teil (34) aus koaxialen, ineinandergesteckten rohrförmigen Teilen bestehen, wobei das innere Rohr (2, 28) den Hochdruckteil bildet, dass diese Rohrteile so ausgebildet sind, dass sowohl das Innenrohr (2) des ersten Teils (1) als auch dessen Aussenrohr (5) beim gegenseitigen Verbinden jeweils in das Innenrohr (28) bzw. Aussenrohr (29) des zweiten Teils (34) einführbar sind, wodurch die Kante des Aussenrohrs (38, 5) des ersten Teils (1) nach Einführung in den zweiten Teil (34) einen federbelasteten Ventilring (24) im Aussenrohr (29) des zweiten Teils (34) so nach innen schiebt, dass praktisch sofort beim gegenseitigen Zusammenkommen eine Verbindung zwischen den Räumen zwischen den Innen- und Aussenrohren der ersten und zweiten Teile hergestellt wird, und dass beim weiteren Einführen des ersten Teils (1) in den zweiten Teil (34) das an seinem äussersten Ende geschlossene Innenrohr (2) des ersten Teils einen federbelasteten Ventilkörper (18) so in das Innenrohr (28) des zweiten Teils (34) einschiebt, dass Fluid unter mässigem Druck durch im Vorderteil der Gehäusefläche des Innenrohrs (2) des ersten Teils (1) angeordnete Löcher (3) in das Innenrohr (28) des zweiten Teils (34) eingelassen wird, während Löcher (12) auch im hinteren Teil dieser Gehäusefläche vorgesehen sind, die eine Verbindung zwischen dem Innenrohr (2) und dem Raum zwischen diesem und dem Aussenrohr (5) des ersten Teils (1) herstellen, und dass bei fortgesetzter Einführung des ersten Teils (1) in den zweiten Teil (34) ein rinförmiger Schieber (4) durch das Innenrohr (28) des zweiten Teils (34) über jene rückwärtigen Löcher (12) in der Gehäusefläche des Innenrohrs (2) des ersten Teils (1) geschoben wird, wodurch Druckfluid in das Innenrohr (28) des zweiten Teils (34) eingelassen wird, sowie dass der Verbinder mit einer Anschlussvorrichtung ausgerüstet ist, die dazu dient, mindestens in der Längsrichtung des Verbinders eine Verbindung beizubehalten, und die ersten und zweiten Teile (1, 34) zusammenhält, wenn diese Teile genügend weit ineinander eingeführt sind, um Fluid unter vollem Druck in den zweiten Teil (34) gelangen zu lassen.

2. Verbinder nach Anspruch 1, dadurch gekennzeichnet, dass besagte Anschlussvorrichtung zur Beibehaltung einer festen Verbindung eine freie Drehung des ersten Teils (1) gegenüber dem zweiten Teil (34) beim gegenseitigen Verbinden dieser Bauteile gestattet.

3. Verbinder nach Anspruch 1—2, dadurch gekennzeichnet, dass dieser zweite Teil (34) mittels eines koaxialen Schlauchs mit einer Fluidmaschine verbunden ist.

4. Verbinder nach einem der vorhergehenden Ansprüche, dadurch gekennzeichnet, dass das Innenrohr (2) des ersten Teils (1) mit einem Zentrierstift (36) versehen ist, der in eine Zentrierbohrung (19) in besagtem federbelastetem Ventilkörper (18) im Innenrohr (28) des zweiten Teils (34) passt.

5. Verbinder nach einem der vorhergehenden Ansprüche, dadurch gekennzeichnet, dass besagte Anschlussvorrichtung als Bajonetthalterung ausgebildet ist.

**Revendications**

1. Accouplement (1, 34) pour un conduit (16) et un conduit de retour (10), qui permet la connexion d'une première partie (1) qui au moment de l'accouplement est connectée à une pompe de production de pression ou un compresseur, à une seconde partie (34) qui est connectée à une machine à fluide pourvue d'un agencement de soupape de mise en action (54, 55), qui à la position de repos ne bloque pas la connexion entre le conduit de pression reçue et le conduit de retour (52), caractérisé en ce que ladite première partie (1) et ladite seconde partie (34) se composent toutes deux de parties tubulaires coaxiales placées l'une dans l'autre, dont le tube interne (2, 28) forme la partie haute pression, en ce que les parties de tube sont conçues de façon que le tube interne (2) de la première partie (1) et son tube externe (5) puissent être introduits respectivement dans le tube interne (28) et le tube externe (29) de la seconde partie (34) pendant l'interconnexion, ainsi le bord du tube externe (38, 5) de la première partie (1) après introduction dans la seconde partie (34) a poussé vers l'intérieur une bague de soupape chargée par ressort (24) dans le tube externe (29) de la seconde partie (34) avec pour résultat que pratiquement immédiatement au début de l'interconnexion, une connexion est établie entre les espaces entre les tubes interne et externe des première et seconde parties et que pendant l'introduction continue de la première partie (1) dans la seconde partie (34), le tube interne (2) de la première partie, qui est fermé à son extrémité, pousse un corps de soupape (18) chargé par ressort dans le tube interne (28) de la seconde partie (34) de façon qu'un fluide à une pression modérée soit introduit dans le tube interne (28) de la seconde partie (34) par des trous (3) vers l'avant dans la surface du boîtier du tube interne (2) de la première partie (1) tandis qu'il y a également des trous (12) vers l'arrière dans la surface du boîtier qui établissent une connexion entre le tube interne (2) et l'espace entre le tube interne (2) et le tube externe (5) de la première partie (1) et en ce qu'un tiroir (4) en forme de bague est poussé par le tube interne (28) de la seconde partie (34) sur lesdits trous arrière (12) dans la surface de boîtier du tube interne (2) de la première partie (1) pendant l'introduction continue de la première partie (1) dans la seconde partie (34) et ainsi du fluide sous pression est introduit dans le tube interne (28) de la seconde partie (34) et en ce que l'accouplement est équipé d'un dispositif de connexion pour maintenir, au moins en direction longitudinale de l'accouplement, une connexion, maintenant ensemble les première et seconde parties (1, 34) lorsque ces parties ont été introduites suffisamment loin l'une dans l'autre, pour permettre au fluide de passer à la seconde partie (34) sous une pleine pression.

2. Accouplement selon la revendication 1, caractérisé en ce que ledit dispositif de connexion pour maintenir une connexion de maintien permit une libre rotation de la première partie (1) par rapport à la seconde partie (34) lorsque ces composants sont connectés ensemble.

3. Accouplement selon la revendication 1—2, caractérisé en ce que ladite seconde partie (34) est connectée à une machine à fluide au moyen d'un tuyau flexible coaxial.

4. Accouplement selon l'une quelconque des revendications précédentes, caractérisé en ce que le tube interne (2) de la première partie (1) est pourvu d'une broche de centrage (36) qui s'adapte dans un trou de centrage (19) dans ledit corps de soupape chargé par ressort (18) dans le tube interne (28) de la seconde partie (34).

5. Accouplement selon l'une quelconque des revendications précédentes, caractérisé en ce que ledit dispositif de connexion est conçu comme un support à baîonette.

Fig.1.

Fig.2.

Fig.3.

_Fig.4._

41

40

6

_Fig.7._

43

29

42

43

_Fig.5._

6

9

5

41

38

_Fig.6._

41

9

5

38

Fig.8.

43
91

Fig.9.

43

Fig.10.

63
61
62
65 64
66
65

4